# EUROPEAN PATENT SPECIFICATION

(11) **EP 0 950 890 B1**
(45) Date of publication and mention of the grant of the patent: **22.06.2005**
(21) Application number: 99400897.7
(22) Date of filing: 13.04.1999
(51) Int. Cl.: G01N 15/14

(54) **Particle imaging apparatus**
Teilchenabbildevorrichtung
Dispositif d'image de particules

(30) Priority: 13.04.1998 JP 14035298
(43) Date of publication of application: 20.10.1999
(73) Proprietor: Sysmex Corporation, Kobe-shi, Hyogo 651-0073 (JP)
(72) Inventor: Kubota, Fumio, Hyogo 662-0097 (JP); Imura, Yasuyuki, Kobe-shi, Hyogo 651-2273 (JP)
(74) Representative: Doireau, Marc

(56) References cited:
- EP-A- 0 468 100
- EP-A- 0 564 122
- WO-A-92/13265
- - -
- US-A- 4 243 318
- US-A- 4 500 641

## Description

### BACKGROUND OF THE INVENTION

### Field of the Invention

The present invention relates to a particle imaging apparatus, and more particularly to a particle imaging apparatus (image flow cytometer) using a flow cell for forming a sample flow by surrounding, with a sheath liquid, a sample liquid containing particles such as blood corpuscles and cells, and imaging the particles with a plurality of systems.

### Description of the Related Art

Hitherto, in a field of particle analysis by imaging, there is known an apparatus (image flow cytometer) for capturing images of particles by allowing the particles to flow through a flow cell. In order to improve an accuracy of the particle analysis, it is necessary to collect useful information as much as possible from the particles.

For this purpose, in Japanese Unexamined Patent Publication No. JP01296136, images of a particle are captured in directions which are perpendicular to each other; and in Japanese Unexamined Patent Publication No. JP07286953, a plurality of images are captured for one particle in different directions or at different focussing points.

However, the invention disclosed in Japanese Unexamined Patent Publication No. Hei 01 (1989) - 296136 determines only whether the particle is spherical or not, and no more information such as internal information is captured, so that it has been impossible to differentiate particles having similar sizes or shapes.

Also, the invention disclosed in Japanese Unexamined Patent Publication No. JP07286953 aims at capturing images of minute light-emitting points distributed within a cell, so that this has also been hardly sufficient from the view point of particle analysis.

Document EP 0 564 122 A1 discloses an apparatus for imaging particles comprising a flow cell and a particle imaging system using a pulse light source.

Document US 4 500 641 discloses a flow cytometer for identifying algae, cells or particles in water using two light sources and a plurality of light detectors.

Document JP9021741 discloses a sheath flow analyzer for suspended particles with a trigger light source providing a continuous beam and a related detector at a first position along the sample flow axis, and with a pulsed laser light source and a CCD camera on opposite sides of the flow cell at a second position downstream of the first position.

Document US4573796 describes an apparatus for eliminating background interference during fluorescence measurements in a multiple laser flow cytometer. Two pulsed or continuous laser sources and two related pairs of detectors, each pair consisting of a scattered light detector and a fluorescence detector, are located at two different positions along the sample flow axis.

### SUMMARY OF THE INVENTION

The present invention has been made in view of these circumstances and the purpose thereof is to provide a particle imaging apparatus capable of obtaining particle images for differentiating particles with more accuracy.

Accordingly, the present invention provides a particle imaging apparatus according to claim 1.

### BRIEF DESCRIPTION OF THE DRAWINGS

The present invention will be better understood from the following detailed description of preferred embodiments of the invention, taken in conjunction with the accompanying drawings, in which:
Fig. 1 is a view showing a block diagram of a particle imaging apparatus according to an embodiment of the present invention;
Fig. 2 is a plan view showing an optical system section of the particle imaging apparatus according to the embodiment of the present invention;
Fig. 3 is a schematic perspective view showing a flow cell section of the particle imaging apparatus according to the embodiment of the present invention;

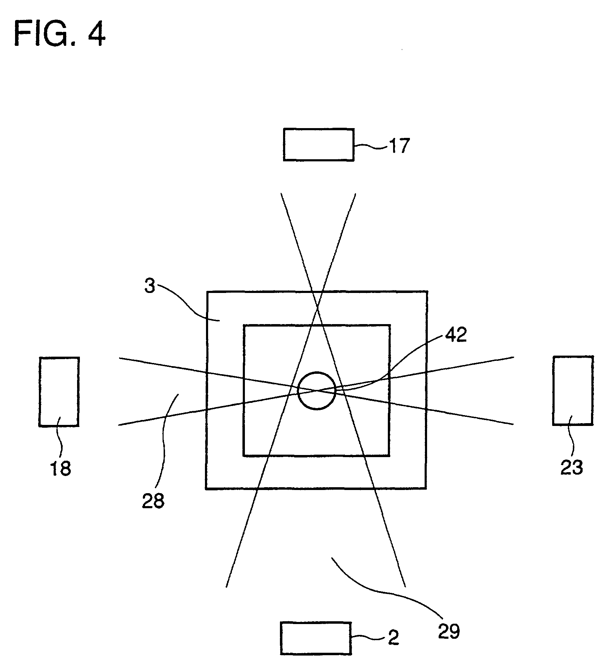

Fig. 4 is a plan view showing an essential part of the optical system section of the particle imaging apparatus according to the embodiment of the present invention;
Fig. 5 is a view showing photographs of erythrocytes which are imaged by the particle imaging apparatus according to the embodiment of the present invention;
Fig. 6 is a view showing photographs of leukocytes which are imaged by the particle imaging apparatus according to the embodiment of the present invention;
Fig. 7 is a view showing photographs of erythrocytes which are imaged by the particle imaging apparatus according to the embodiment of the present invention;
Fig. 8 is a view showing photographs of leukocytes which are imaged by the particle imaging apparatus according to the embodiment of the present invention;

### DETAILED DESCRIPTION OF THE PREFERRED EMBODIMENTS

A particle imaging apparatus of the present invention may include a flow cell and a particle imaging system. The flow cell may allow a sample flow to be formed by surrounding a sample liquid containing particles with a sheath liquid. The particle imaging system captures images of each particle in the sample flow. The particle imaging system includes first and second particle imaging sub-systems. The first and second particle imaging sub-systems may include first and second light sources having different focussing configurations for radiating light to each particle.

This provides the advantage that different images of the particle may be captured by the two particle imaging sub-systems, whereby the particle may be characterised more accurately based on information of the particle images which are different from each other.

In the present invention, the first particle imaging system may mainly capture an image representative of internal information of each particle, and the second particle imaging system may mainly capture an image representative of external information of each particle.

This provides an advantage that each particle may be characterised more accurately and in detail because the characterisation is based on the internal and external information of the particle.

In the present invention, the first and second light sources may have different focussing points for radiating light to each particle.

For example, the particle may pass near a focussing point of the first light source in the first particle imaging system, whereby the images of the internal information of the particle may be captured because the particle receives a light beam having a large brightness. On the other hand, the particle may pass a point located away from a focussing point of the second light source in the second particle imaging system, whereby the images of the external information of the particle may be captured because the particle receives a light beam having a low brightness.

This provides an advantage that each particle may be differentiated more accurately and in detail because the differentiation is based on the internal and external information of the particle.

In the present invention, an optical axis of the first particle imaging system at a first level and an optical axis of the second particle imaging system at a second level may pass over each other in these two levels at a center of the sample flow. This provides the advantage that the first and second particle imaging systems may be disposed near to each other in the flow direction of the particles.

### EMBODIMENTS

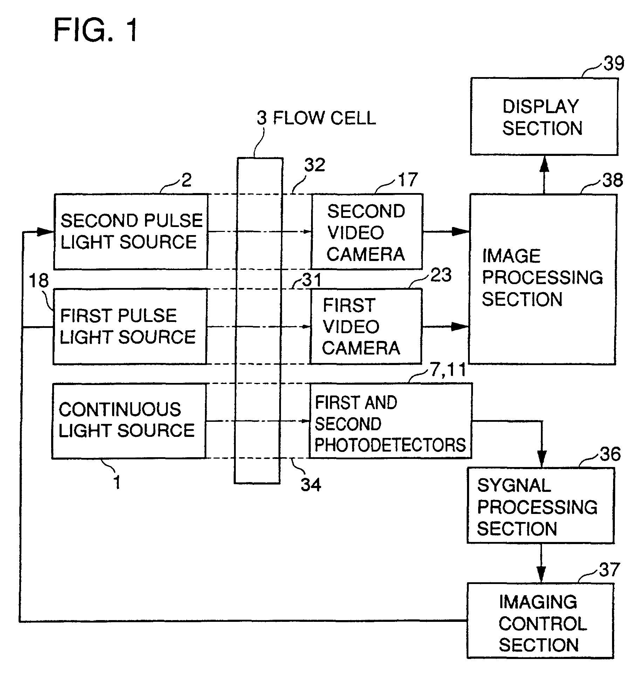

Referring to Fig. 1, a flow cell 3 allows a sample flow to be formed by surrounding a sample liquid, which contains particles such as erythrocytes and leukocytes, with a sheath liquid. The flow cell 3 includes a first particle imaging sub-system 31, a second particle imaging sub-system 32, and a particle detecting system 34. The first particle imaging system 31 serves to obtain a first image of a particle as viewed in a first direction. The second particle imaging system 32 serves to obtain a second image of the same particle as viewed in a second direction different from the first direction substantially by 90°.

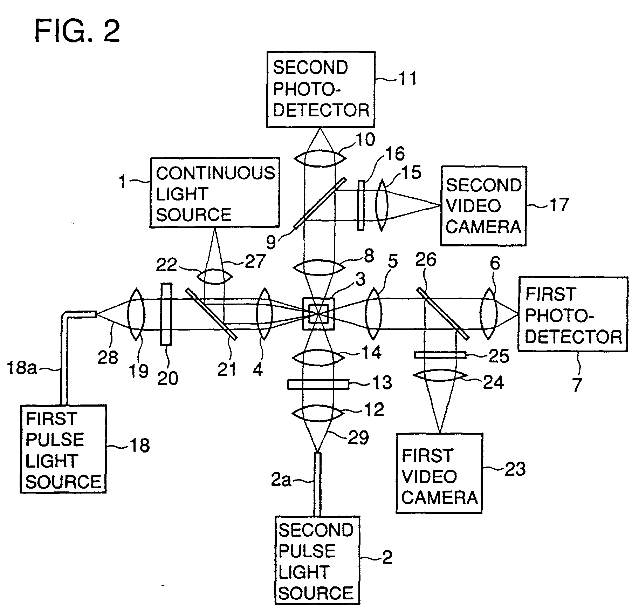

Referring to Fig. 2, the particles flow in a direction perpendicular to the document sheet. An optical system section related to the flow cell 3 is disposed around the flow of the particles. The optical system section includes the particle detecting system 34, the first particle imaging system 31, and the second particle imaging system 32.

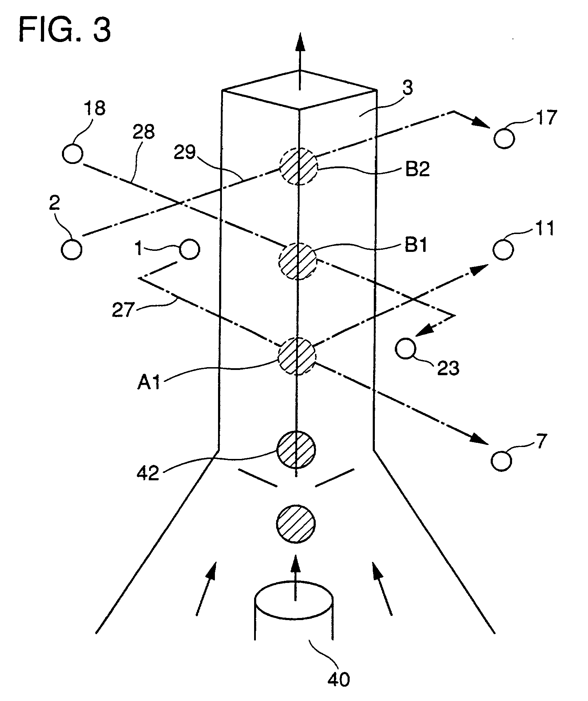

Referring to Fig. 3, a particle 42 ejected from a nozzle 40 flows from under the document sheet upwards while being surrounded by the sheath liquid.

The particle detecting system 34 includes a continuous emission light source 1 (a green semiconductor laser having a wavelength of 532 nm), a first photodetector 7 (photodiode) for detecting a light beam emitted forwards from the particle 42 (forward scattered light), and a second photodetector 11 (a photomultiplier tube) for detecting a light beam emitted sidewards from the particle 42 (side fluorescent light).

The first particle imaging sub-system 31 includes a first pulse light source 18 (a near infrared semiconductor laser having a wavelength of 780 nm) and a first video camera 23. The second particle imaging sub-system 32 includes a second pulse light source 2 (a near infrared semiconductor laser having a wavelength of 780 nm) and a second video camera 17.

The light beams 27, 28, 29 emitted from the light sources 1, 18, 2 are applied to the flowing particle 42 in respective directions perpendicular to the flow direction of the particle 42. The direction of the light beams 27, 28 from the light sources 1, 18 is different from the direction of the light beam 29 from the light source 2 by 90°.

Referring to Fig. 3 again, the optical elements (light sources and other components) are disposed so that the light beam 28 from the first pulse light source 18 is positioned downstream by, for example, about 0.02 mm from the position of the light beam 27 from the continuous emission light source 1, and the light beam 29 from the second pulse light source 2 is positioned further downstream by, for example, about 0.02 mm.

The light beam 28 from the continuous emission light source 1 is converted into a collimated light beam by a collimator lens 22 and is reflected by a dichroic mirror 21 and narrowed down by a condenser lens 4 to be directed to the sample flow at the center of the flow cell 3. When a particle passes at a point A1 corresponding to this irradiated area, the forward scattered light and the side fluorescent light from the particle are collected by collector lenses 5, 8 to pass through the condenser lenses 6, 10 to be received by the first and second photodetectors 7, 11, respectively.

Signals generated for each particle by the photodetectors 7, 11 are processed in a signal processing section 36 for extraction of characteristic parameters (which may be, for example, peak values or pulse widths of the signals, the latter being the case in this example).

The characteristic parameters obtained in the signal processing section 36 are sent to an imaging control section 37. If the characteristic parameters satisfy a given condition, an imaging trigger signal is generated to drive the first and second particle imaging system, whereby particle images are captured when the particle detected at position A1 shown in Fig. 3 arrives at positions B1, B2.

Namely, the imaging control section 37 serves to select and image the particle that is designated beforehand as an imaging object. For this purpose, the characteristic parameters of a particle are compared in real time with the characteristic parameters of the intended type of particles to be imaged. As a result, if it is determined that the particle is an intended object to be imaged, the imaging trigger signal for capturing particle images is generated and supplied to the pulse light sources 18, 2.

A trigger signal Ts1 is generated so that a first pulse light will be emitted exactly when the particle detected at the position A1 reaches the position B1. A trigger signal Ts2 is generated so that a second pulse light will be emitted exactly when the particle detected at the position A1 reaches the position B2.

The pulse light sources 18, 2 are each a type of a light source that emits light only for a moment (about several ten nanoseconds) by the trigger signals Ts1, Ts2 from the imaging control section 37. Therefore, even if the sample flow has a high flow rate of several m/s, the images of the particle at the positions B1, B2 may be captured without blurring. Also, since the distance between the positions B1, B2 is extremely short, the particle will not be rotated to turn its direction while traveling.

A video synchronization signal of the second video camera 17 is phase-shifted relative to a video synchronization signal of the first video camera 23 for a period of time (for example, 4 µsec) necessary for the particle to travel from the position B1 to the position B2. This makes it possible to capture images of the same particle with each of the first and second video cameras at the same video timing, thus facilitating confirmation that the captured images are those of the same particle.

The pulse light beams from the pulse light sources 18, 2 are narrowed down by optical fibers 18a, 2a, collimator lenses 19, 12, cold mirrors 20, 13, and condenser lenses 4, 14, respectively, to be applied to the sample flow. Use of the optical fibers reduces coherency of the pulse laser beams, whereby particle images may be captured with limited diffraction patterns.

The pulse light beams 28, 29 that have passed through the sample flow are focussed on the light-receiving surfaces of the first video camera 23 and the second video camera 17 by the collector lenses 5, 8, dichroic mirrors 26, 9, bandpass filters 25, 16, and projection lenses 24, 15, respectively, to capture transmission images of the same particle.

The bandpass filters 25, 16 are used for the purpose of, for example, stopping the visible light emitted from the continuous light source 1 so as to detect only the light beams from the pulse light sources. The video signals from the video cameras 23, 17 are sent to the image processing section 38 acting as analyzing means, where the received video signals are stored as digital images and subjected to image processing.

Next, with reference to Fig. 3, an explanation will be made on the difference in the way of radiation, namely, that the first particle imaging sub-system 31 and the second particle imaging sub-system 32 have different focussing configurations.

As will be apparent from Fig. 3, the light beam 28 from the pulse light source 18 in the first particle imaging sub-system 31 is applied so that the light beam 28 is focussed near the particle 42, whereas the light beam 29 from the pulse light source 2 in the second particle imaging sub-system 32 is applied so that the light beam 29 is focussed at a position away from the particle 42 in the direction of the optical axis. This means that the inequality L1 < L2 is satisfied, where L1 is the distance between the focussing point of the first pulse light source 18 and the particle 42 on the optical axis thereof, and L2 is the distance between the focussing point of the second pulse light source 2 and the particle 42 on the optical axis thereof.

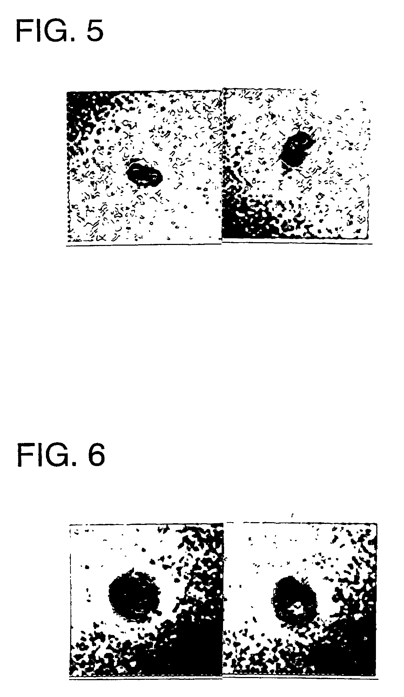

If different focussing configurations are provided for radiation light beams applied to the particle 42, the captured images will be different. If the light beam is focussed on the particle 42, the light beam is concentrated on the particle 42, whereby internal information of the particle 42 may be advantageously obtained. The distance L1 is substantially equal to zero (L1=0 or L1≈0). Concretely, particle images may be captured that provide a good representation of a nucleus contained in the particle or a Hgb amount, as shown in Fig. 5 (erythrocytes) and Fig. 6 (leukocytes).

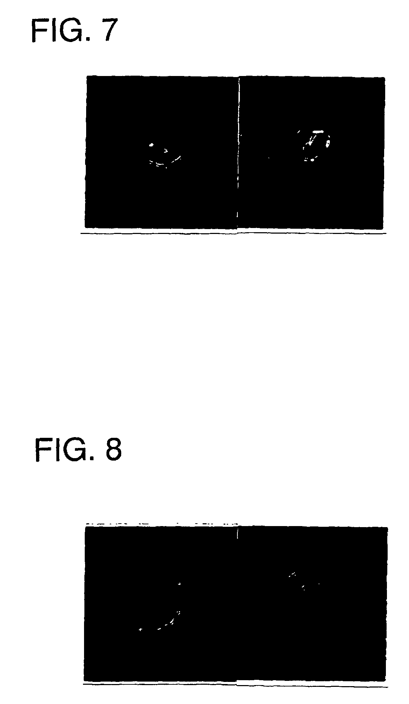

On the other hand, if the light beam is not focussed on the particle 42, the light beam is applied onto the whole particle 42 widely, whereby external information of the particle 42 may be advantageously obtained. The distance L2 is greater than zero. Concretely, particle images may be captured that provide a good representation of a profile of the particle 42, as shown in Fig. 7 (erythrocytes) and Fig. 8 (leukocytes).

The particle images obtained in the above manner provide extremely useful information in performing analysis of particles.

The particles 42 to be analyzed according to the present invention may be any particles including, for example, inorganic powders such as fine ceramics, pigments, cosmetic powders, and toners, organic powders such as emulsions and food additives, and living body particles such as blood corpuscles and cells. The particles to be analyzed may be stained beforehand.

In view of capturing images more effectively and with more certainty, a particle detecting system for detection of arrival of a particle is preferably disposed upstream of an image capturing region in the flow cell so that the particle imaging system may capture images of the particle upon detection of the particle. Various embodiments of this particle detecting sub-system, including optical and electrical systems, may be considered. As an example, this particle detecting system may be realized by a combination of a light source for applying continuous light beams to the particle flow region and a photodetector for receiving a scattered light or a fluorescent light from the particle that has arrived at a light application region.

Still images of the particle may be obtained effectively and with certainty by controlling the light sources of the first and second particle imaging sub-systems to emit light beams based on particle detection signals generated in the particle detecting system. The second particle imaging sub-system is disposed a little downstream of the first particle imaging system in view of the facility in positioning the particle imaging sub-systems and the reduction of mutual optical interference, because the timing of pulse light emission can be shifted.

Here, in this embodiment, the focussing configuration for radiation light beams applied to each particle is varied by changing the distance between the particle to be imaged and the focussing point on the optical axis. However, the focussing configuration may be varied by using a light source having a high brightness together with a light source having a low brightness.

As described and shown above, since the first and second particle imaging sub-systems include first and second light sources having different focussing configurations for radiating light to each particle in the present invention, different images of the particle may be captured by the two particle imaging systems, whereby the particle may be characterised more accurately based on information of the particle images which are different from each other.

In the present invention, the first particle imaging sub-system may mainly capture images of internal information of each particle, and the second particle imaging sub-system may mainly capture images of external information of each particle. Accordingly, each particle may be characterised more accurately and in detail because the characterisation is based on the internal and external information of the particle.

In the present invention, the first and second light sources may have different focussing points with respect to each particle.

For example, the particle may pass near a focussing point of the first light source in the first particle imaging sub-system, whereby the images of the internal information of the particle may be captured because the particle receives a light beam having a large brightness. On the other hand, the particle may pass a point located away from the focussing point of the second light source in the second particle imaging sub-system, whereby the images of the external information of the particle may be captured because the particle receives a light beam having a low brightness.

Accordingly, each particle may be characterised more accurately and in detail because the characterisation is based on the internal and external information of the particle.

In the present invention, an optical axis of the first particle imaging system at a first level and an optical axis of the second particle imaging system at a second level may cross each other in these two levels at a center of the sample flow. This provides the advantage that the first and second particle imaging sub-systems may be disposed near to each other in the flow direction of the particles.

Although the present invention has fully been described by way of example with reference to the accompanying drawings, it is to be understood that various changes and modifications will be apparent to those skilled in the art.

## Claims

1. A particle imaging apparatus comprising a flow cell (3) for forming a sample flow by surrounding, with a sheath liquid, a sample liquid containing particles, and a particle imaging system for successively imaging each particle in the sample flow, **characterized in that** the particle imaging system includes first (31) and second (32) particle imaging sub-systems, wherein the first particle imaging sub-system (31) comprises a first pulse light source (18) for emitting a pulse light, the second particle imaging sub-system (32) comprises a second pulse light source (2) for emitting a pulse light, a first light beam (28) from the first light pulse source (18) irradiates a first position of the sample flow, a second light beam (29) from the second light pulse source (2) irradiates a second position of the sample flow, and the first position is positioned upstream of the second position.

2. A particle imaging apparatus according to claim 1, wherein the first particle imaging sub-system (31) mainly captures an image representative of internal information of each particle, and the second particle imaging sub-system (32) mainly captures an image representative of external information of each particle.

3. A particle imaging apparatus according to claim 1 or 2, wherein the second light source (2) radiates light to each particle more widely than the first light source (18).

4. A particle imaging apparatus according to claim 1, 2 or 3, wherein the first (28) and second (29) light beams have different focussing points with respect to each particle.

5. A particle imaging apparatus according to claim 1, 2, 3 or 4, wherein a distance L1 between a focussing point of the first light source (18) and the particle to be imaged is smaller than a distance L2 between a focussing point of the second light source (2) and the particle to be imaged.

6. A particle imaging apparatus according to claim 5, wherein the distance L1 is substantially equal to zero and the distance L2 is greater than zero.

7. A particle imaging apparatus according to claim 1, 2, 3, 4, 5 or 6, wherein an optical axis of the first particle imaging system (31) and an optical axis of the second particle imaging system (32) cross each other in two levels at a center of the sample flow.

8. A particle imaging apparatus according to claim 1, 2, 3, 4, 5, 6 or 7, further comprising:
a third light source (1) emitting a continuous light, a third light beam (27) from the third light source irradiating a third position of the sample flow, the third position being positioned upstream of the first position.

9. A particle imaging apparatus according to claim 8, further comprising:
a particle detecting system (34) including the third light source (1) and a photodetector (7),
a signal processing section (36) for extraction of a characteristic parameter from signals generated for each particle by the photodetector (7), and
an imaging control section (37) for control of the first pulse light source (18) and the second pulse light source (2) by the characteristic parameter.

## Patentansprüche

1. Ein Partikelabbildungsgerät mit einer Flusszelle (3) zum Bilden einer Substanzprobe bzw. eines Substanzflusses durch Umgeben einer partikelenthaltenden Substanzflüssigkeit mit einer Hüllflüssigkeit, und einem Partikelabbildungssystem zum aufeinanderfolgenden Abbilden jedes Partikels in der Substanzprobe, **dadurch gekennzeichnet, dass** das Partikelabbildungssystem ein erstes (31) und ein zweites (32) Partikelabbildungsuntersystem umfasst, wobei das erste Partikelabbildungsuntersystem (31) eine erste Pulslichtquelle (18) zum Emittieren eines Pulslichtes umfasst, das zweite Partikelabbildungsuntersystem (32) eine zweite Pulslichtquelle (2) zum Emittieren eines Pulslichtes umfasst, wobei ein erster Lichtstrahl (28) von der ersten Lichtpulsquelle (18) eine erste Stelle der Substanzprobe bestrahlt, ein zweiter Lichtstrahl (29) von der zweiten Lichtpulsquelle (2) eine zweite Stelle der Substanzprobe bestrahlt und die erste Stelle stromaufwärts der zweiten Stelle angeordnet ist.

2. Ein Partikelabbildungsgerät gemäß Anspruch 1, wobei das erste Partikelabbildungsuntersystem (31) hauptsächlich eine Abbildung erfasst, die eine interne Information jedes Partikels darstellt, und das zweite Partikelabbildungsuntersystem (32) hauptsächlich eine Abbildung erfasst, die eine externe Information jedes Partikels darstellt.

3. Ein Partikelabbildungsgerät gemäß Anspruch 1 oder 2, wobei die zweite Lichtquelle (2) Licht zu jedem Partikel breiter als die erste Lichtquelle (18) abstrahlt.

4. Ein Partikelabbildungsgerät gemäß Anspruch 1, 2 oder 3, wobei der erste (28) und zweite (29) Lichtstrahl verschiedene Fokussierungspunkte hinsichtlich jedes Partikels aufweisen.

5. Ein Partikelabbildungsgerät gemäß Anspruch 1, 2, 3 oder 4, wobei ein Abstand L1 zwischen einem Fokussierungspunkt der ersten Lichtquelle (18) und des abzubildenden Partikels kleiner ist als ein Abstand L2 zwischen einem Fokussierungspunkt der zweiten Lichtquelle (2) und des abzubildenden Partikels.

6. Ein Partikelabbildungsgerät gemäß Anspruch 5, wobei der Abstand L1 im wesentlichen gleich Null und der Abstand L2 größer als Null ist.

7. Ein Partikelabbildungsgerät gemäß Anspruch 1, 2, 3, 4, 5 oder 6, wobei eine optische Achse des ersten Partikelabbildungssystems (31) und eine optische Achse des zweiten Partikelabbildungssystems (32) einander in zwei Ebenen in der Mitte der Substanzprobe kreuzen.

8. Ein Partikelabbildungsgerät gemäß Anspruch 1, 2, 3, 4, 5, 6 oder 7, weiterhin umfassend:
eine dritte Lichtquelle (1), die ein kontinuierliches Licht emittiert, einen eine dritte Stelle der Substanzprobe bestrahlenden dritten Lichtstrahl (27) von der dritten Lichtquelle, wobei die dritte Stelle stromaufwärts der ersten Stelle angeordnet ist.

9. Ein Partikelabbildungsgerät gemäß Anspruch 8, weiterhin umfassend:
ein Partikeldetektierungssystem (34) einschließlich der dritten Lichtquelle (1) und eines Photodetektors (7), einen Signalverarbeitungsabschnitt (36) zum Extrahieren eines charakteristischen Parameters von für jeden Partikel durch den Photodetektor (7) erzeugten Signalen, und
einen Abbildungssteuerungsabschnitt (37) zum Steuern der ersten Pulslichtquelle (18) und der zweiten Pulslichtquelle (2) durch den charakteristischen Parameter.

## Revendications

1. Appareil d'imagerie de particules comprenant une cellule d'écoulement (3) pour former un écoulement d'un échantillon en entourant, avec un liquide gaine, un liquide échantillon contenant des particules, et un système d'imagerie de particules pour imager successivement chaque particule dans l'écoulement d'échantillonnage, **caractérisé en ce que** le système d'imagerie de particules comprend un premier (31) et un second (32) sous-systèmes d'imagerie de particules, dans lequel le premier sous-système d'imagerie de particules (31) comprend une première source de lumière pulsée (18) pour émettre une lumière pulsée, le second sous-système d'imagerie de particules (32) comprend une seconde source de lumière pulsée (2) pour émettre une lumière pulsée, un premier faisceau lumineux (28) à partir de la première source d'impulsion de lumière (18) irradie une première position de l'écoulement d'échantillon, un deuxième faisceau lumineux (29) à partir de la seconde source d'impulsion lumineuse (2) irradie une deuxième position de l'écoulement d'échantillon, et la première position est positionnée en amont de la deuxième position.

2. Appareil d'imagerie de particules selon la revendication 1, dans lequel le premier sous-système d'imagerie de particules (31) capture principalement une image représentative d'informations internes de chaque particule, et le second sous-système d'imagerie de particules (32) capture principalement une image représentative d'informations externes de chaque particule.

3. Appareil d'imagerie de particule selon la revendication 1 ou 2, dans lequel la deuxième source lumineuse (2) émet de la lumière vers chaque particule plus largement que la première source lumineuse (18).

4. Appareil d'imagerie de particules selon la revendication 1, 2 ou 3, dans lequel les premier (28) et second (29) faisceaux lumineux présentent différents points de focalisation par rapport à chaque particule.

5. Appareil d'imagerie de particules selon la revendication 1, 2, 3 ou 4, dans lequel une distance L1 entre un point de focalisation de la première source lumineuse (18) et la particule devant être imagée est plus petite qu'une distance L2 entre un point de la deuxième source lumineuse (2) et la particule devant être imagée.

6. Appareil d'imagerie de particules selon la revendication 5, dans lequel la distance L1 est sensiblement égale à zéro et la distance L2 est supérieure à zéro.

7. Appareil d'imagerie de particules selon la revendication 1, 2, 3, 4, 5 ou 6, dans lequel un axe optique du premier système d'imagerie de particules (31) et un axe optique du second système d'imagerie de particules (32) se croisent l'un l'autre à deux niveaux en un centre de l'écoulement d'échantillon.

8. Appareil d'imagerie de particules selon la revendication 1, 2, 3, 4, 5, 6 ou 7, comprenant en outre :
une troisième source lumineuse (1) émettant une lumière continue, un troisième faisceau lumineux (27) à partir de la troisième source lumineuse irradiant une troisième position de l'écoulement d'échantillon, la troisième position étant positionnée en amont de la première position.

9. Appareil d'imagerie de particules selon la revendication 8, comprenant en outre :
un système de détection de particules (34) comprenant la troisième source lumineuse (1) et un photodétecteur (7),
une partie de traitement de signal (36) pour l'extraction d'un paramètre caractéristique à partir de signaux générés pour chaque particule par le photodétecteur (7), et
une partie de commande d'imagerie (37) pour la commande de la première source de lumière pulsée (18) et la deuxième source de lumière pulsée (2) par le paramètre caractéristique.
